(19) Europäisches Patentamt
European Patent Office
Office européen des brevets

(11) **EP 4 518 184 A1**

(12) **EUROPEAN PATENT APPLICATION**
published in accordance with Art. 153(4) EPC

(43) Date of publication:
**05.03.2025 Bulletin 2025/10**

(21) Application number: **23796788.0**

(22) Date of filing: **26.04.2023**

(51) International Patent Classification (IPC):
**H04B 7/08** (2006.01)   **H04W 16/28** (2009.01)
**H04W 4/06** (2009.01)   **H04W 72/23** (2023.01)

(52) Cooperative Patent Classification (CPC):
**H04B 7/08; H04W 4/06; H04W 16/28; H04W 72/23**

(86) International application number:
**PCT/KR2023/005665**

(87) International publication number:
**WO 2023/211145 (02.11.2023 Gazette 2023/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.04.2022 KR 20220052404**

(71) Applicant: **LG Electronics Inc.**
**Yeongdeungpo-gu**
**Seoul 07336 (KR)**

(72) Inventors:
• **KIM, Hyungtae**
**Seoul 06772 (KR)**
• **KANG, Jiwon**
**Seoul 06772 (KR)**

(74) Representative: **Mooser, Sebastian Thomas**
**Wuesthoff & Wuesthoff**
**Patentanwälte und Rechtsanwalt PartG mbB**
**Schweigerstraße 2**
**81541 München (DE)**

(54) **METHOD AND DEVICE FOR TRANSMITTING/RECEIVING WIRELESS SIGNAL IN WIRELESS COMMUNICATION SYSTEM**

(57)    A method and a device for transmitting/receiving a wireless signal in a wireless communication system are disclosed. The method according to one embodiment of the present disclosure comprises the steps of: receiving setting information about a plurality of TCI states from a base station; receiving control information from the base station, the control information including one or more TCI states to be applied to one or more UEs from among the plurality of TCI states, and an individual time offset for each of the one or more TCI states; and transmitting an uplink transmission or receiving a downlink transmission on the basis of the one or more TCI states from the time according to the time offset.

FIG.22

Receive configuration information for a plurality of TCI states — S2201

Receive control information — S2202

Transmit uplink / Receive downlink — S2203

EP 4 518 184 A1

## Description

[Technical Field]

The present disclosure relates to a wireless communication system, and in more detail, relates to a method and an apparatus for transmitting and receiving uplink transmission or downlink transmission in a wireless communication system.

[Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

A technical object of the present disclosure is to provide a method and an apparatus for transmitting and receiving uplink transmission (e.g., physical uplink shared channel (PUSCH), physical uplink control channel (PUCCH), etc.) or downlink transmission (e.g., physical downlink shred channel (PDSCH), physical downlink control channel (PDCCH)).

In addition, an additional technical object of the present disclosure is to provide a method and an apparatus for configuring a beam (or transmission configuration indication (TCI) state) of uplink/downlink transmission for one or more user equipments (UEs).

The technical objects to be achieved by the present disclosure are not limited to the above-described technical objects, and other technical objects which are not described herein will be clearly understood by those skilled in the pertinent art from the following description.

[Technical Solution]

A method performed by a user equipment (UE) in a wireless communication system according to an aspect of the present disclosure may include: receiving, from a base station, configuration information for a plurality of transmission configuration indication (TCI) states; receiving, from the base station, control information, wherein the control information includes one or more TCI states to be applied to one or more UEs among the plurality of TCI states and an individual time offset for each of the one or more TCI states; and transmitting an uplink transmission or receiving a downlink transmission based on the one or more TCI states from a time according to the time offset.

A method performed by a base station in a wireless communication system according to an additional aspect of the present disclosure may include: transmitting, to a user equipment (UE), configuration information for a plurality of transmission configuration indication (TCI) states; transmitting, to the UE, control information, wherein the control information includes one or more TCI states to be applied to one or more UEs among the plurality of TCI states and an individual time offset for each of the one or more TCI states; and receiving an uplink transmission or transmitting a downlink transmission based on the one or more TCI states from a time according to the time offset.

[Technical Effects]

According to an embodiment of the present disclosure, signaling overhead can be reduced by indicating one or more beams (or TCI states) to one or more UEs through a single signaling.

In addition, according to an embodiment of the present disclosure, by predicting and indicating a future point in time at which one or more beams (or TCI states) will be applied, it is possible to adapt more quickly to a channel condition that can change rapidly.

Effects achievable by the present disclosure are not limited to the above-described effects, and other effects which are not described herein may be clearly understood by those skilled in the pertinent art from the following description.

[Brief Description of the Drawings]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 illustrates a classification of artificial intelligence.
FIG. 8 illustrates a feed-forward neural network.
FIG. 9 illustrates a recurrent neural network.
FIG. 10 illustrates a convolutional neural network.
FIG. 11 illustrates an auto encoder.
FIG. 12 illustrates a functional framework for an AI operation.
FIG. 13 is a diagram illustrating split AI inference.
FIG. 14 illustrates an application of a functional framework in a wireless communication system.
FIG. 15 illustrates an application of a functional framework in a wireless communication system.
FIG. 16 illustrates an application of a functional framework in a wireless communication system.
FIG. 17 is a diagram illustrating a high-speed train scenario.
FIG. 18 is a diagram illustrating a beam indication according to an embodiment of the present disclosure.
FIG. 19 is a diagram illustrating a beam indication according to an embodiment of the present disclosure.
FIG. 20 is a diagram illustrating a beam indication according to an embodiment of the present disclosure.
FIG. 21 is a diagram illustrating a signaling procedure between a network and a UE for a wireless signal transmission and reception method according to an embodiment of the present disclosure.
FIG. 22 is a diagram illustrating an operation of a UE for a wireless signal transmission and reception method according to an embodiment of the present disclosure.
FIG. 23 is a diagram illustrating an operation of a base station for a wireless signal transmission and reception method according to an embodiment of the present disclosure.
FIG. 24 illustrates a block diagram of a wireless communication device according to an embodiment of the present disclosure.

[Detailed Description]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.
In some cases, known structures and devices may be omitted or may be shown in a form of a block diagram based on a core function of each structure and device in order to prevent a concept of the present disclosure from being ambiguous.
In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.
In the present disclosure, a term such as "first", "second", etc. is used only to distinguish one element from other element and is not used to limit elements, and unless otherwise specified, it does not limit an order or importance, etc.

between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point (AP), a Network(5G network), an AI (Artificial Intelligence) system/module, an RSU(road side unit), a robot, a drone (UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC (Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11 (Wi-Fi), IEEE 802.16(WiMAX), IEEE 802-20, E-UTRA(Evolved UTRA), etc. UTRA is a part of a UMTS (Universal Mobile Telecommunications System). 3GPP(3rd Generation Partnership Project) LTE(Long Term Evolution) is a part of an E-UMTS (Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211 (physical channels and modulation), TS 36.212(multiplexing and channel coding), TS 36.213(physical layer procedures), TS 36.300(overall description), TS 36.331(radio resource control) may be referred to.

For 3GPP NR, TS 38.211 (physical channels and modulation), TS 38.212(multiplexing and channel coding), TS 38.213(physical layer procedures for control), TS 38.214 (physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator

- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

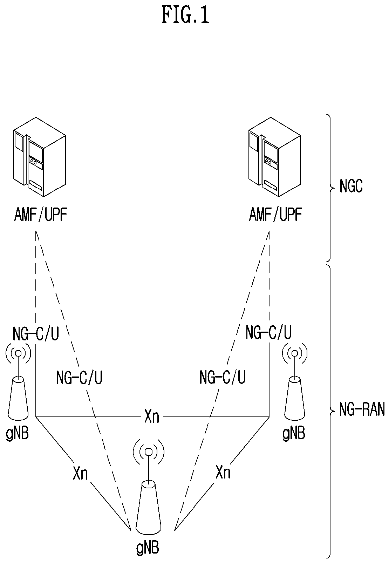

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

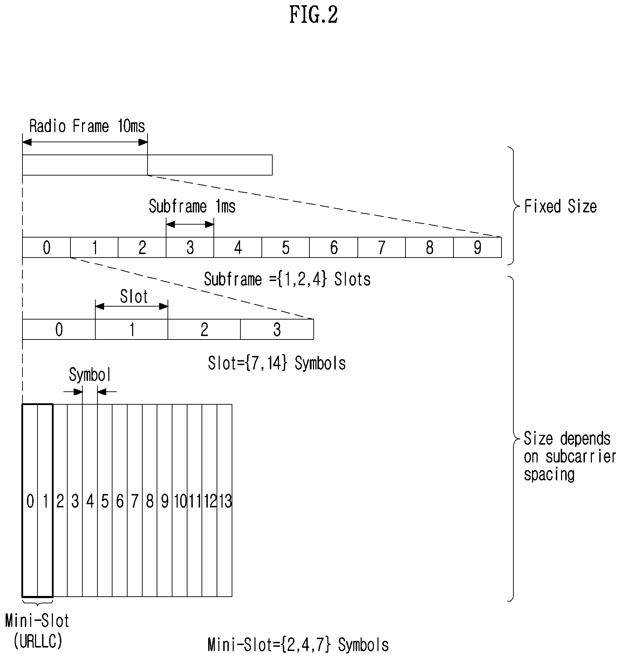

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f = 2^{\mu} \cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise.

An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c = 1/(\Delta f_{max} \cdot N_f)$. Here, $\Delta f_{max}$ is $480 \cdot 10^3$ Hz and $N_f$ is 4096. Downlink and uplink transmission is configured (organized) with a radio frame having a duration of $T_f = 1/(\Delta f_{max} N_f / 100) \cdot T_c = 10$ms. Here, a radio frame is configured with 10 subframes having a duration of $T_{sf} = (\Delta f_{max} N_f / 1000) \cdot T_c = 1$ms, respectively. In this case, there may be one set of frames for an uplink and one set of frames for a downlink. In addition, transmission in an uplink frame No. i from a terminal should start earlier by $T_{TA} = (N_{TA} + N_{TA,offset}) T_c$ than a corresponding downlink frame in a corresponding terminal starts. For a subcarrier spacing configuration $\mu$, slots are numbered in an increasing order of $n_s^{\mu} \in \{0,..., N_{slot}^{subframe,\mu} - 1\}$ in a subframe and are numbered in an increasing order of $n_{s,f}^{\mu} \in \{0,..., N_{slot}^{frame,\mu} - 1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu} N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |

(continued)

| μ | $N_{symb}^{slot}$ | $N_{slot}^{frame,\mu}$ | $N_{slot}^{subframe,\mu}$ |
|---|---|---|---|
| 4 | 14 | 160 | 16 |

[Table 4]

| μ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on μ=2 (SCS is 60kHz), 1 subframe may include 4 slots referring to Table 3. 1 subframe= {1,2,4} slot shown in FIG. 2 is an example, the number of slots which may be included in 1 subframe is defined as in Table 3 or Table 4. In addition, a mini-slot may include 2, 4 or 7 symbols or more or less symbols.

Regarding a physical resource in a NR system, an antenna port, a resource grid, a resource element, a resource block, a carrier part, etc. may be considered. Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

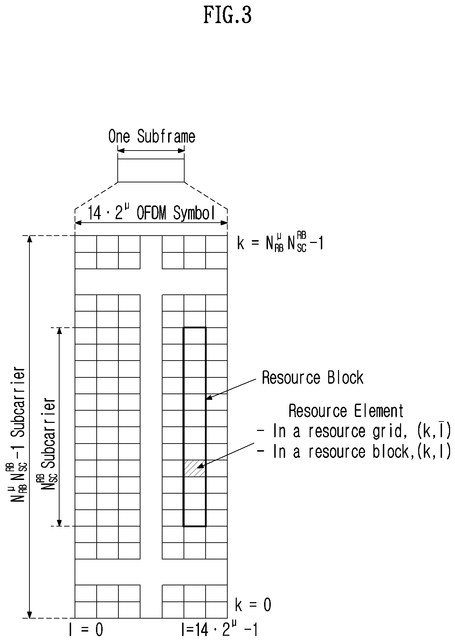

FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per μ and antenna port p. Each element of a resource grid for μ and an antenna port p is referred to as a resource element and is uniquely identified by an index pair (k,l'). Here, k=0,..., $N_{RB}^{\mu}N_{sc}^{RB}$-1 is an index in a frequency domain and l'=0,..., $2^{\mu}N_{symb}^{(\mu)}$-1 refers to a position of a symbol in a subframe. When referring to a resource element in a slot, an index pair (k,l) is used. Here, l=0,..., $N_{symb}^{\mu}$-1. A resource element (k,l') for μ and an antenna port p corresponds to a complex value, $a_{k,l'}^{(p,\mu)}$. When there is no risk of confusion or when a specific antenna port or numerology is not specified, indexes p and μ may be dropped, whereupon a complex value may be $a_{k,l'}^{(p)}$ or $a_{k,l'}$. In addition, a resource block (RB) is defined as $N_{sc}^{RB}$=12 consecutive subcarriers in a frequency domain.

Point A plays a role as a common reference point of a resource block grid and is obtained as follows.

- offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.
- absoluteFrequencyPointA represents a frequency-position of point A expressed as in ARFCN (absolute radiofrequency channel number).

Common resource blocks are numbered from 0 to the top in a frequency domain for a subcarrier spacing configuration μ. The center of subcarrier 0 of common resource block 0 for a subcarrier spacing configuration μ is identical to 'point A'. A relationship between a common resource block number $n_{CRB}^{\mu}$ and a resource element (k,l) for a subcarrier spacing configuration μ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A.

Physical resource blocks are numbered from 0 to $N_{BWP,i}^{size,\mu}$-1 in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

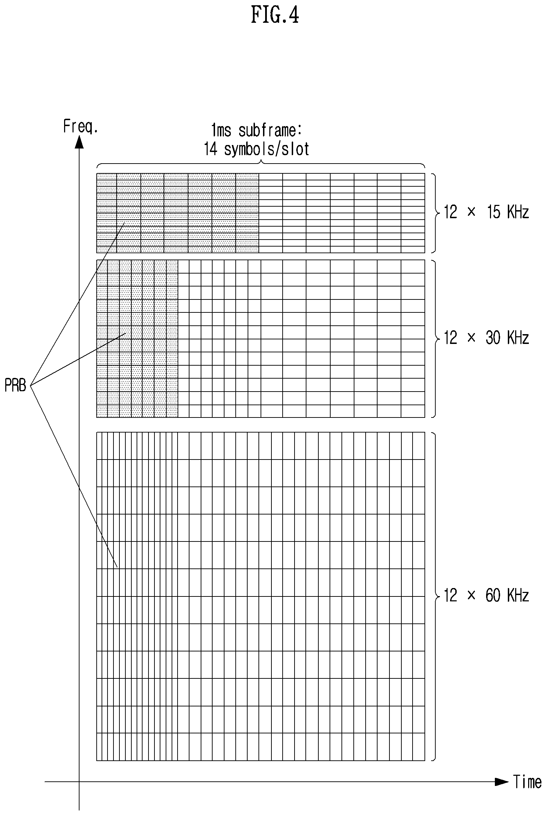

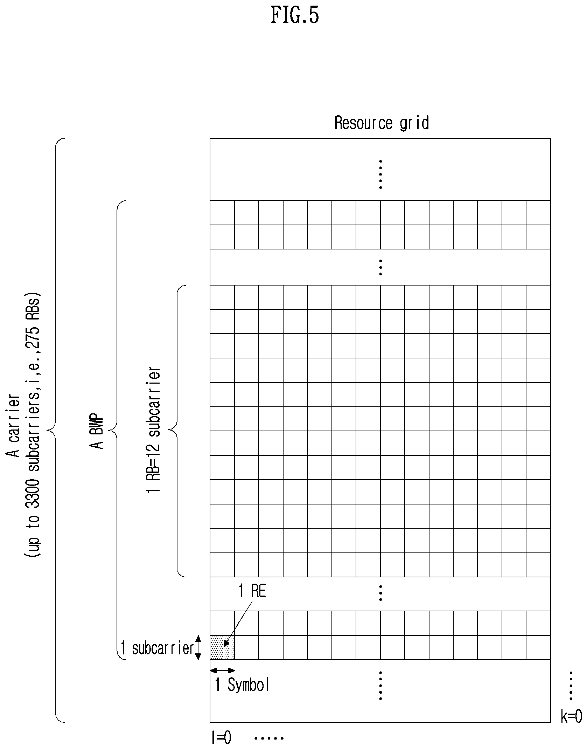

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE (Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

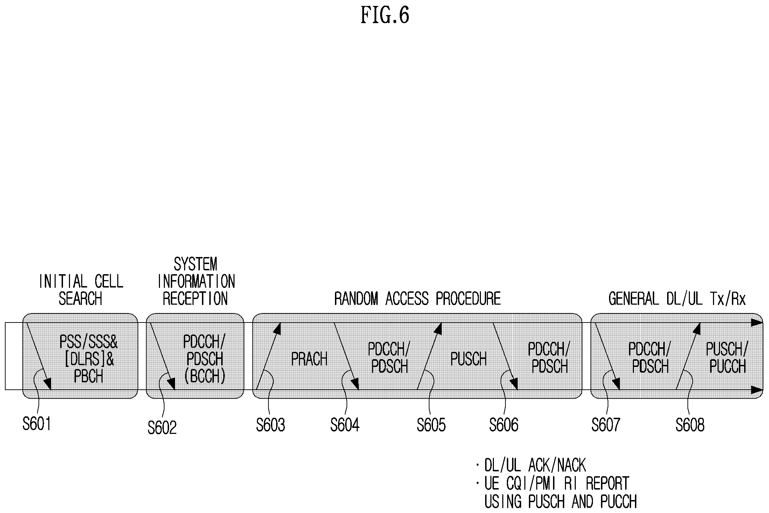

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block) -PRB (physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

<u>Artificial Intelligence (AI) operation</u>

With the technological advancement of artificial intelligence/machine learning (AI/ML), node(s) and UE(s) in a wireless communication network are becoming more intelligent/advanced. In particular, due to the intelligence of networks/base stations, it is expected that it will be possible to rapidly optimize and derive/apply various network/base station decision parameter values (e.g., transmission/reception power of each base station, transmission power of each UE, precoder/beam of base station/UE, time/frequency resource allocation for each UE, duplex method of each base station, etc.) according to various environmental parameters (e.g., distribution/location of base stations, distribution/location/material of buildings/furniture, etc., location/movement direction/speed of UEs, climate information, etc.). Following this trend, many standardization organizations (e.g., 3GPP, O-RAN) are considering introduction, and studies on this are also actively underway.

The AI-related descriptions and operations described below can be applied in combination with the methods proposed in the present disclosure described later, or can be supplemented to clarify the technical features of the methods proposed in the present disclosure.

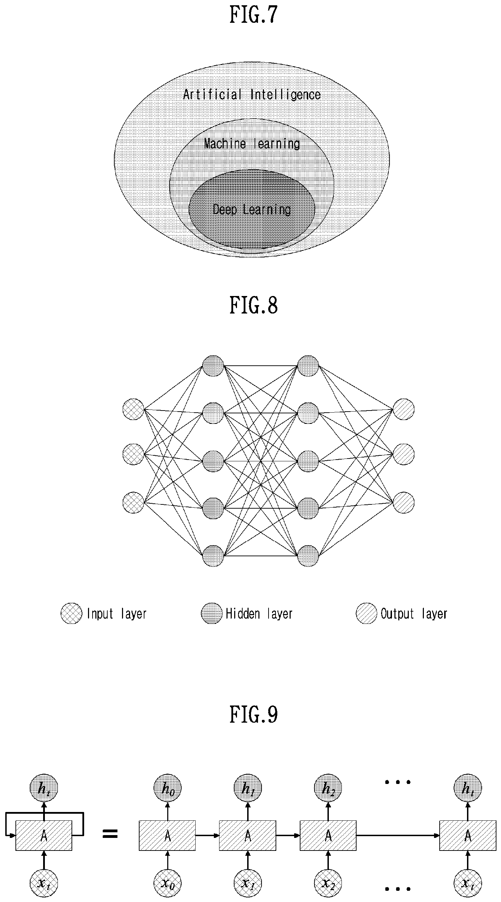

FIG. 7 illustrates a classification of artificial intelligence.

Referring to FIG. 7, artificial intelligence (AI) corresponds to all automation in which machines can replace work that should be done by humans.

Machine Learning (ML) refers to a technology in which machines learn patterns for decision-making from data on their own without explicitly programming rules.

Deep Learning is an artificial neural network-based model that allows a machine to perform feature extraction and decision from unstructured data at once. The algorithm relies on a multi-layer network of interconnected nodes for feature extraction and transformation, inspired by the biological nervous system, or Neural Network. Common deep learning network architectures include deep neural networks (DNNs), recurrent neural networks (RNNs), and convolutional neural networks (CNNs).

AI (or referred to as AI/ML) can be narrowly referred to as artificial intelligence based on deep learning, but is not limited to this in the present disclosure. That is, in the present disclosure, AI (or AI/ML) may collectively refer to automation technologies applied to intelligent machines (e.g., UE, RAN, network nodes, etc.) that can perform tasks like humans.

AI (or AI/ML) can be classified according to various criteria as follows.

1. Offline/online learning

a) Offline Learning

Offline learning follows a sequential procedure of database collection, learning, and prediction. In other words, collection and learning can be performed offline, and the completed program can be installed in the field and used for prediction work. For offline learning, the system does not learn incrementally, the learning is performed using all available collected data and applied to the system without further learning. If learning about new data is necessary, learning can begin again using all new data.

b) Online Learning

This refers to a method of gradually improving performance by incrementally additional learning with data generated in real time, recently, by taking advantage of the fact that data that can be used for learning continues to be generated through the Internet, Learning is performed in real time for each (bundle) of specific data collected online, allowing the system to quickly adapt to changing data.

Only online learning is used to build an AI system, so learning may be performed only with data generated in real time, or after offline learning is performed using a predetermined data set, additional learning may be performed using additional real-time data (online + offline learning).

2. Classification according to AI/ML Framework concept

a) Centralized Learning

In centralized learning, training data collected from a plurality of different nodes is reported to a centralized node, all data resources/storage/learning (e.g., supervised learning, unsupervised learning, reinforcement learning, etc.) are performed in one centralized node.

b) Federated Learning

Federated learning is a collective model built on data that exists across distributed data owners. Instead of collecting data into a model, AI/ML models are imported into a data source, allowing local nodes/individual devices to collect data and train their own copies of the model, eliminating the need to report the source data to a central node. In federated learning, the parameters/weights of an AI/ML model can be sent back to the centralized node to support general model training. Federated learning has advantages in terms of increased computation speed and information security. In other words, the process of uploading personal data to the central server is unnecessary, preventing leakage and misuse of personal information.

c) Distributed Learning

Distributed learning refers to the concept in which machine learning processes are scaled and distributed across a cluster of nodes. Training models are split and shared across multiple nodes operating simultaneously to speed up model training.

3. Classification according to learning method

a) Supervised Learning

Supervised learning is a machine learning task that aims to learn a mapping function from input to output, given a labeled data set. The input data is called training data and has known labels or results. An example of supervised learning is as follows.

- Regression: Linear Regression, Logistic Regression
- Instance-based Algorithms: k-Nearest Neighbor (KNN)
- Decision Tree Algorithms: Classification and Regression Tree (CART)
- Support Vector Machines (SVM)
- Bayesian Algorithms: Naive Bayes
- Ensemble Algorithms: Extreme Gradient Boosting, Bagging: Random Forest

Supervised learning can be further grouped into regression and classification problems, where classification is predicting a label and regression is predicting a quantity.

b) Unsupervised Learning

Unsupervised learning is a machine learning task that aims to learn features that describe hidden structures in unlabeled data. The input data is not labeled and there are no known results. Some examples of unsupervised learning include K-means clustering, Principal Component Analysis (PCA), nonlinear Independent Component Analysis (ICA), and Long-Short-Term Memory (LSTM) .

c) Reinforcement Learning (RL)

In reinforcement learning (RL), the agent aims to optimize long-term goals by interacting with the environment based on a trial and error process, and is goal-oriented learning based on interaction with the environment. An example of the RL algorithm is as follows.

- Q-learning
- Multi-armed bandit learning
- Deep Q Network
- State-Action-Reward-State-Action (SARSA)
- Temporal Difference Learning
- Actor-critic reinforcement learning
- Deep deterministic policy gradient (DDPG)
- Monte-Carlo tree search

Additionally, reinforcement learning can be grouped into model-based reinforcement learning and model-free reinforcement learning as follows.

- Model-based reinforcement learning: refers to RL algorithm that uses a prediction model. Using a model of the various dynamic states of the environment and which states lead to rewards, the probabilities of transitions between states are obtained.

- Model-free reinforcement learning: refers to RL algorithm based on value or policy that achieves the maximum future reward. Multi-agent environments/states are computationally less complex and do not require an accurate representation of the environment.

Additionally, RL algorithm can also be classified into value-based RL vs. policy-based RL, policy-based RL vs. non-policy RL, etc.

Hereinafter, representative models of deep learning will be exemplified.

FIG. 8 illustrates a feed-forward neural network.

A feed-forward neural network (FFNN) is composed of an input layer, a hidden layer, and an output layer.

In FFNN, information is transmitted only from the input layer to the output layer, and if there is a hidden layer, it passes through it.

FIG. 9 illustrates a recurrent neural network.

A recurrent neural network (RNN) is a type of artificial neural network in which hidden nodes are connected to directed edges to form a directed cycle. This model is suitable for processing data that appears sequentially, such as voice and text.

In FIG. 9, A represents a neural network, xt represents an input value, and ht represents an output value. Here, ht may refer to a state value representing the current state based on time, and ht-1 may represent a previous state value.

One type of RNN is LSTM (Long Short-Term Memory), which has a structure that adds a cell-state to the hidden state of the RNN. LSTM can erase unnecessary memories by adding an input gate, forgetting gate, and output gate to the RNN cell (memory cell of the hidden layer). LSTM adds cell state compared to RNN.

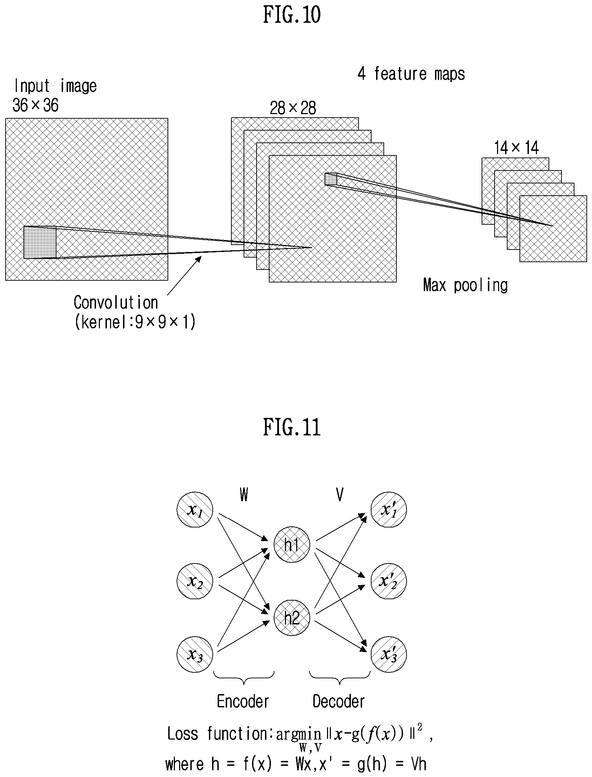

FIG. 10 illustrates a convolutional neural network.

Convolutional neural network (CNN) is used for two purposes: reducing model complexity and extracting good features by applying convolution operations commonly used in the image processing or image processing fields.

- Kernel or filter: refers to a unit/structure that applies weight to input of a specific range/unit. The kernel (or filter) can be changed through learning.

- Stride: refers to the movement range of moving the kernel within the input.

- Feature map: refers to the result of applying the kernel to input. Several feature maps can be extracted to ensure robustness to distortion, change, etc.

- Padding: refers to a value added to adjust the size of the feature map.

- Pooling: refers to an operation (e.g., max pooling, average pooling) to reduce the size of the feature map by downsampling the feature map.

FIG. 11 illustrates an auto encoder.

Auto encoder refers to a neural network that receives a feature vector x (x1, x2, x3, ...) as input and outputs the same or similar vector x' (x'1, x'2, x'3, ...)".

Auto encoder has the same characteristics as the input node and output node. Since the auto encoder reconstructs the input, the output can be referred to as reconstruction. Additionally, auto encoder is a type of unsupervised learning.

The loss function of the auto encoder illustrated in FIG. 11 is calculated based on the difference between input and output, and based on this, the degree of input loss is identified and an optimization process is performed in the auto encoder to minimize the loss.

Hereinafter, for a more specific explanation of AI (or AI/ML), terms can be defined as follows.

- Data collection: Data collected from the network nodes, management entity or UE, as a basis for AI model training, data analytics and inference.

- AI Model: A data driven algorithm by applying AI techniques that generates a set of outputs consisting of predicted information and/or decision parameters, based on a set of inputs.

AI/ML Training: An online or offline process to train an AI model by learning features and patterns that best present data and get the trained AI/ML model for inference.

AI/ML Inference: A process of using a trained AI/ML model to make a prediction or guide the decision based on collected data and AI/ML model.

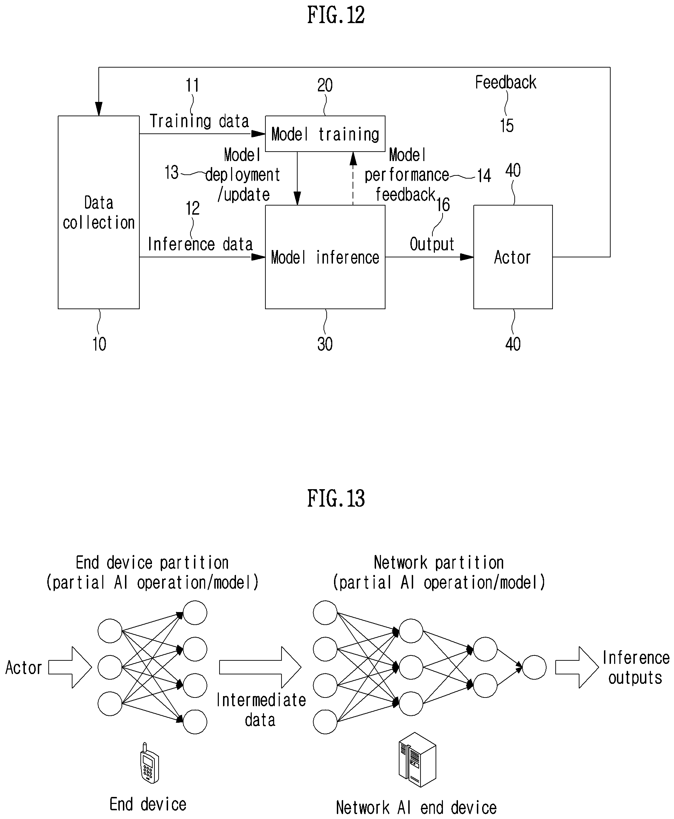

FIG. 12 illustrates a functional framework for an AI operation.

Referring to Figure 12, the data collection function (10) is a function that collects input data and provides processed input data to the model training function (20) and the model inference function (30).

Examples of input data may include measurements from UEs or different network entities, feedback from Actor, output from an AI model.

The Data Collection function (10) performs data preparation based on input data and provides input data processed through data preparation. Here, the Data Collection function (10) does not perform specific data preparation (e.g., data pre-processing and cleaning, formatting and transformation) for each AI algorithm, and data preparation common to AI algorithms can be performed.

After performing the data preparation process, the Model Training function (10) provides Training Data (11) to the Model Training function (20) and provides Inference Data (12) to the Model Inference function (30). Here, Training Data (11) is data required as input for the AI Model Training function (20). Inference Data (12) is data required as input for the AI Model Inference function (30).

The Data Collection function (10) may be performed by a single entity (e.g., UE, RAN node, network node, etc.), but may also be performed by a plurality of entities. In this case, Training Data (11) and Inference Data (12) can be provided from a plurality of entities to the Model Training function (20) and the Model Inference function (30), respectively.

Model Training function (20) is a function that performs the AI model training, validation, and testing which may generate model performance metrics as part of the model testing procedure. The Model Training function (20) is also responsible for data preparation (e.g., data pre-processing and cleaning, formatting, and transformation) based on Training Data (11) delivered by a Data Collection function (10), if required.

Here, Model Deployment/Update (13) is used to initially deploy a trained, validated, and tested AI model to the Model Inference function (30) or to deliver an updated model to the Model Inference function (30).

Model Inference function (30) is a function that provides AI model inference output (16) (e.g., predictions or decisions). Model Inference function (30) may provide Model Performance Feedback (14) to Model Training function (20) when applicable. The Model Inference function (30) is also responsible for data preparation (e.g., data pre-processing and cleaning, formatting, and transformation) based on Inference Data (12) delivered by a Data Collection function (10), if required.

Here, Output (16) refers to the inference output of the AI model produced by a Model Inference function (30), and details of inference output may be use case specific.

Model Performance Feedback (14) may be used for monitoring the performance of the AI model, when available, and this feedback may be omitted.

Actor function (40) is a function that receives the Output (16) from the Model Inference function (30) and triggers or performs corresponding actions. The Actor function (40) may trigger actions directed to other entities (e.g., one or more UEs, one or more RAN nodes, one or more network nodes, etc) or to itself.

Feedback (15) may be used to derive Training data (11), Inference data (12) or to monitor the performance of the AI Model and its impact to the network, etc.

Meanwhile, the definitions of training/validation/test in the data set used in AI/ML can be divided as follows.

- Training data: refers to a data set for learning a model.
- Validation data: This refers to a data set for verifying a model for which learning has already been completed. In other words, it usually refers to a data set used to prevent over-fitting of the training data set.

It also refers to a data set for selecting the best among various models learned during the learning process. Therefore, it can also be considered as a type of learning.

- Test data: refers to a data set for final evaluation. This data is unrelated to learning.

In the case of the data set, if the training set is generally divided, within the entire training set, training data and validation data can be divided into 8:2 or 7:3, and if testing is included, 6:2:2 (training: validation: test) can be used.

Depending on the capability of the AI/ML function between a base station and a UE, a cooperation level can be defined as follows, and modifications can be made by combining the following multiple levels or separating any one level.

Cat 0a) No collaboration framework: AI/ML algorithm is purely implementation-based and do not require any air interface changes.

Cat 0b) This level corresponds to a framework without cooperation but with a modified air interface tailored to efficient implementation-based AI/ML algorithm.

Cat 1) This involves inter-node support to improve the AI/ML algorithm of each node. This applies if a UE receives support from a gNB (for training, adaptation, etc.) and vice versa. At this level, model exchange between network nodes is not required.

Cat 2) Joint ML tasks between a UE and a gNB may be performed. This level requires AI/ML model command and an exchange between network nodes.

The functions previously illustrated in FIG. 12 may be implemented in a RAN node (e.g., base station, TRP, base station central unit (CU), etc.), a network node, a network operator's operation administration maintenance (OAM), or a UE.

Alternatively, the function illustrated in FIG. 12 may be implemented through cooperation of two or more entities among a RAN, a network node, an OAM of network operator, or a UE. For example, one entity may perform some of the functions of FIG. 12 and other entities may perform the remaining functions. As such, as some of the functions illustrated in FIG. 12 are performed by a single entity (e.g., UE, RAN node, network node, etc.), transmission/provision of data/information between each function may be omitted. For example, if the Model Training function (20) and the Model Inference function (30) are performed by the same entity, the delivery/provision of Model Deployment /Update (13) and Model Performance Feedback (14) can be omitted.

Alternatively, any one of the functions illustrated in FIG. 12 may be performed through collaboration between two or more entities among a RAN, a network node, an OAM of a network operator, or a UE. This can be referred to as a split AI operation.

FIG. 13 is a diagram illustrating split AI inference.

FIG. 13 illustrates a case in which, among split AI operations, the Model Inference function is performed in cooperation with an end device such as a UE and a network AI/ML endpoint.

In addition to the Model Inference function, the Model Training function, the Actor, and the Data Collection function are respectively split into multiple parts depending on the current task and environment, and can be performed by multiple entities collaborating.

For example, computation-intensive and energy-intensive parts may be performed at a network endpoint, while parts sensitive to personal information and delay-sensitive parts may be performed at an end device. In this case, an end device can execute a task/model from input data to a specific part/layer and then transmit intermediate data to a network endpoint. A network endpoint executes the remaining parts/layers and provides inference outputs to one or more devices that perform an action/task.

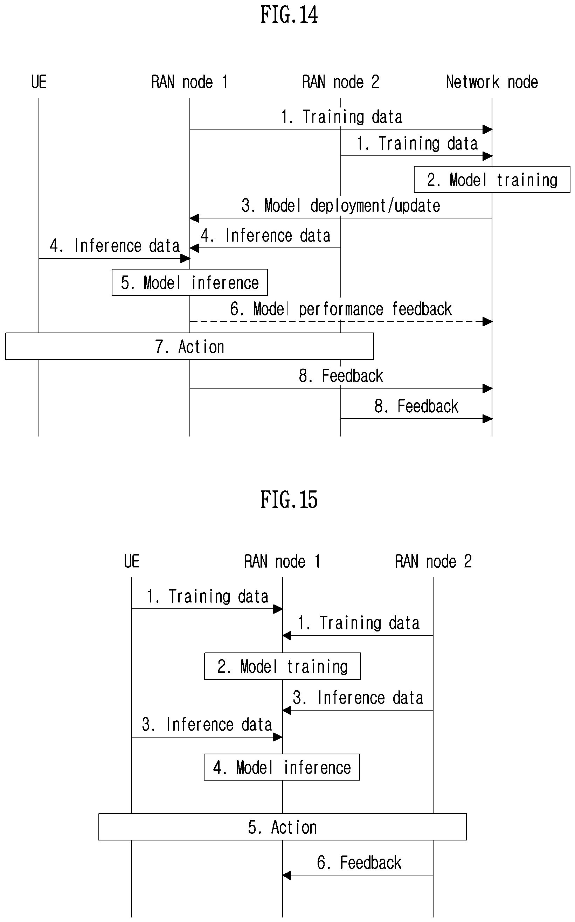

FIG. 14 illustrates an application of a functional framework in a wireless communication system.

FIG. 14 illustrates a case where the AI Model Training function is performed by a network node (e.g., core network node, network operator's OAM, etc.) and the AI Model Inference function is performed by a RAN node (e.g., base station, TRP, CU of base station, etc.).

Step 1: RAN Node 1 and RAN Node 2 transmit input data (i.e., Training data) for AI Model Training to the network node. Here, RAN Node 1 and RAN Node 2 may transmit the data collected from the UE (e.g., UE measurements related to RSRP, RSRQ, SINR of the serving cell and neighboring cells, UE location, speed, etc.) to the network node.

Step 2: The network node trains the AI Model using the received training data.

Step 3: The network node distributes/updates the AI Model to RAN Node 1 and/or RAN Node 2. RAN Node 1 (and/or RAN Node 2) may continue to perform model training based on the received AI Model.

For convenience of explanation, it is assumed that the AI Model has been distributed/updated only to RAN Node 1.

Step 4: RAN Node 1 receives input data (i.e., Inference data) for AI Model Inference from the UE and RAN Node 2.

Step 5: RAN Node 1 performs AI Model Inference using the received Inference data to generate output data (e.g., prediction or decision).

Step 6: If applicable, RAN Node 1 may send model performance feedback to the network node.

Step 7: RAN Node 1, RAN Node 2, and UE (or 'RAN Node 1 and UE', or 'RAN Node 1 and RAN Node 2') perform an action based on the output data. For example, in the case of load balancing operation, the UE may move from RAN node 1 to RAN node 2.

Step 8: RAN Node 1 and RAN Node 2 transmit feedback information to the network node.

FIG. 15 illustrates an application of a functional framework in a wireless communication system.

FIG. 15 illustrates a case where both the AI Model Training function and the AI Model Inference function are performed by a RAN node (e.g., base station, TRP, CU of the base station, etc.).

Step 1: The UE and RAN Node 2 transmit input data (i.e., Training data) for AI Model Training to RAN Node 1.

Step 2: RAN Node 1 trains the AI Model using the received training data.

Step 3: RAN Node 1 receives input data (i.e., Inference data) for AI Model Inference from the UE and RAN Node 2.

Step 4: RAN Node 1 performs AI Model Inference using the received Inference data to generate output data (e.g., prediction or decision).

Step 5: RAN Node 1, RAN Node 2, and the UE (or 'RAN Node 1 and UE', or 'RAN Node 1 and RAN Node 2') perform an action based on the output data. For example, in the case of load balancing operation, the UE may move from RAN node 1 to RAN node 2.

Step 6: RAN node 2 transmits feedback information to RAN node 1.

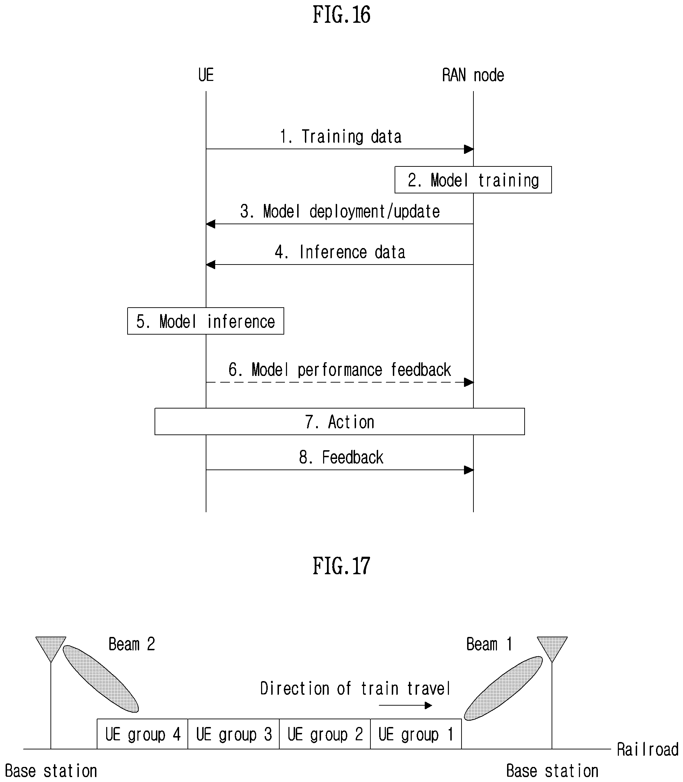

FIG. 16 illustrates an application of a functional framework in a wireless communication system.

FIG. 16 illustrates a case where the AI Model Training function is performed by a RAN node (e.g., base station, TRP, CU of the base station, etc.), and the AI Model Inference function is performed by the UE.

Step 1: The UE transmits input data (i.e., Training data) for AI Model Training to the RAN node. Here, the RAN node may collect data (e.g., measurements of the UE related to RSRP, RSRQ, SINR of the serving cell and neighboring cells, location of the UE, speed, etc.) from various UEs and/or from other RAN nodes.

Step 2: The RAN node trains the AI Model using the received training data.

Step 3: The RAN node distributes/updates the AI Model to the UE. The UE may continue to perform model training based on the received AI Model.

Step 4: The UE receives input data (i.e., Inference data) for AI Model Inference from the RAN node (and/or from other UEs).

Step 5: The UE performs AI Model Inference using the received Inference data to generate output data (e.g., prediction or decision).

Step 6: If applicable, the UE may transmit model performance feedback to the RAN node.

Step 7: The UE and the RAN node perform an action based on output data.

Step 8: The UE transmits feedback information to the RAN node.

Quasi-co Locaton (QCL)

An antenna port is defined so that a channel where a symbol in an antenna port is transmitted can be inferred from a channel where other symbol in the same antenna port is transmitted. When a property of a channel where a symbol in one antenna port is carried may be inferred from a channel where a symbol in other antenna port is carried, it may be said that 2 antenna ports are in a QC/QCL (quasi co-located or quasi co-location) relationship.

Here, the channel property includes at least one of delay spread, doppler spread, frequency/doppler shift, average received power, received timing/average delay, or a spatial RX parameter. Here, a spatial Rx parameter means a spatial (Rx) channel property parameter such as an angle of arrival.

A terminal may be configured at list of up to M TCI-State configurations in a higher layer parameter PDSCH-Config to decode a PDSCH according to a detected PDCCH having intended DCI for a corresponding terminal and a given serving cell. The M depends on UE capability.

Each TCI-State includes a parameter for configuring a quasi co-location relationship between ports of one or two DL reference signals and a DM-RS of a PDSCH.

A quasi co-location relationship is configured by a higher layer parameter qcl-Type1 for a first DL RS and qcl-Type2 for a second DL RS (if configured). For two DL RSs, a QCL type is not the same regardless of whether a reference is a same DL RS or a different DL RS.

A quasi co-location type corresponding to each DL RS is given by a higher layer parameter qcl-Type of QCL-Info and may take one of the following values.

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

For example, when a target antenna port is a specific NZP CSI-RS, it may be indicated/configured that a corresponding NZP CSI-RS antenna port(s) is quasi-colocated with a specific TRS with regard to QCL-Type A and is quasi-colocated with a specific SSB with regard to QCL-Type D. A terminal received such indication/configuration may receive a corresponding NZP CSI-RS by using a doppler, delay value measured in a QCL-TypeA TRS and apply a Rx beam used for receiving QCL-TypeD SSB to reception of a corresponding NZP CSI-RS.

UE may receive an activation command by MAC CE signaling used to map up to 8 TCI states to a codepoint of a DCI field 'Transmission Configuration Indication'.

Beam indication method

In the present disclosure, a QCL type-D reference signal (RS) or a TCI state (or simply TCI) may mean a spatial parameter, i.e., a QCL reference RS for a DL beam, or may be extended and interpreted as a reference RS or source RS for the spatial parameter or other beam/spatial-related parameters. In addition, in the proposed method of the present disclosure, in an environment where analog beamforming is not used, such as a low-frequency band, an indication of QCL type-D RS may be omitted. In this case, a QCL type-D RS in the present disclosure may be interpreted as a QCL reference RS (i.e., if there is only one reference RS in a TCI state, it may refer to the corresponding RS). In addition, from the UL perspective, a TCI state (or simply TCI) may refer to a reference/source RS for a UL beam, or may indicate a spatial relation RS (and pathloss RS) in the existing Rel-15/16. Here, a pathloss RS may be the same as the spatial relation RS, or may be configured in association with a UL TCI state, or may be configured separately.

A beam indication was performed in each DL/UL channel/signal unit in Rel-15, however in Rel-16, an integrated beam indication method for multiple component carriers and an integrated beam indication method for multiple PUCCH resources were introduced. In addition, an integrated beam indication method for multiple DL/UL channels/signals was also introduced in Rel-17. According to the Rel-17 method, a TCI state can be applied not only to DL but also to UL. In addition, since the corresponding TCI state can be applied to a PDCCH, a PDSCH, a PUCCH, a PUSCH, an SRS, and a CSI-RS, a beam for the DL/UL channels/signals can be changed at once by changing/indicating the corresponding TCI state.

A UE may be configured with a list of up to M TCI-state configurations (i.e., DL TCI) in the higher layer parameter PDSCH-Config to decode a PDSCH according to a detected PDCCH containing DCI for the UE and a serving cell. Here, each TCI-state includes parameters for configuring the QCL relationship between one or two DL reference signals (RS) and DM-RS port(s) of a PDSCH, a DM-RS port(s) of a PDCCH, or CSI-RS port(s) of a CSI.

In addition, the UE may be configured with a list of up to 128 TCI-state configurations in the higher layer parameter dl-OrJointTCI-StateToAddModList (i.e., joint TCI) in PDSCH-Config to i) provide an RS for QCL for a DMRS of a PDSCH and a DMRS of a PDCCH, a CSI-RS in a BWP/CC, and ii) provide reference for determining a UL Tx spatial filter for dynamic grant and configured grant based PUSCH and PUCCH resources in a BWP/CC.

In addition, a UE can be configured with a list of up to 64 TCI-UL-State configurations (i.e., UL TCI) within the higher layer parameter BWP-UplinkDedicated. Each TCI-UL-State configuration includes parameters for configuring an RS for determining dynamic-grant and configured-grant based PUSCH and PUCCH resources within a CC, and a UL TX spatial filter for an SRS.

The beam indication method is roughly divided into the following two types.

Scheme 1) MAC-CE based scheme

As described above, when N TCI states are configured by RRC signaling and only one TCI state among the N TCI states is activated through an MAC-control element (CE), a UE applies the corresponding TCI state to the channels/signals (i.e., applies the beam activated by MAC-CE).

For example, a MAC CE for a TCI state indication of a DL RS/channel may include a semi-persistent (SP) CSI-RS/CSI-IM resource set activation/deactivation MAC CE, a TCI states activation/deactivation MAC CE for a UE-specific PDSCH, a TCI state indication MAC CE for a UE-specific PDCCH, etc. In addition, a MAC CE for spatial relation or TCI state indication of a UL RS/channel may include an SP SRS activation/deactivation MAC CE, an enhanced SP/AP SRS spatial relation indication MAC CE, an SP/AP SRS TCI state indication MAC CE, a PUCCH spatial relation activation/-deactivation MAC CE, an enhanced PUCCH spatial relation activation/dactivation MAC CE, etc. In addition, a MAC CE for unified TCI state indication for a DL RS/channel and a UL RS/channel may include a unified TCI States activation/deactivation MAC CE, etc.

Scheme 1) DCI based scheme

As described above, N TCI states are configured by RRC signaling, and M (M>1) TCI states are activated among them by a MAC-CE (refer to MAC CE exemplified in the MAC-CE-based method). Thereafter, one TCI state among the M activated TCI states is designated by DCI (using a TCI field in a predefined DCI). A UE applies the corresponding TCI state to the channels/signals (i.e., applies the beam finally indicated by the DCI).

A UE can assume that when a TCI-state is configured in dl-OrJoint-TCIStateList or PDSCH-Config, a DMRS of a PDSCH, a DMRS of a PDCCH, and a CSI-RS are QCL'd with an RS whose qcl-Type is set to 'typeD' in the indicated TCI-state.

When a UE is configured with dl-OrJoint-TCIStateList or TCI-UL-State, the UE may perform PUSCH transmission corresponding to type 1 configured grant or type 2 configured grant or dynamic grant according to a spatial relation referring to an RS for determining a UL TX spatial filter. The RS can be determined based on i) an RS configured with qcl-Type set to 'typeD' in the indicated TCI-state or ii) an RS in the indicated TCI-UL-State.

In the case of a network that can predict an optimal transmission beam (Tx beam) for a future point in time by introducing AI/ML, etc. in the future, the Tx beam of UL/DL can be determined more effectively.

In this disclosure, a multicast (future-optimal) beam indication method for a UE group including multiple UEs based on (i.e., by extending/modifying) the above beam indication operation/method is proposed.

In the present disclosure, a beam can be interpreted equivalently to a TCI state (or simply TCI).

In addition, in the description of the present disclosure below, even if not otherwise stated, it is assumed that a UE group is composed of one or more UEs, and in the case where it is composed of only one UE, one UE group can be interpreted as one UE.

In the case of a high speed train (HST), a UE moves at a high speed but moves at a constant speed along the track, so it is relatively easy to predict the transmission and reception beams.

FIG. 17 is a diagram illustrating a high-speed train scenario.

Referring to FIG. 17, UEs included in UE group 4 are currently receiving a DL channel with beam 2, and UEs included in UE group 1 are currently receiving a DL channel with beam 1. Since there are UE groups 1, 2, 3, and 4 from a front in a direction of travel of a train, it is desirable that after a certain time t, UE group 2 receives the DL channel with beam 1, after a certain time 2t, UE group 3 receives the DL channel with beam 1, and after a certain time 3t, UE group 4 receives the DL channel with beam 1. Therefore, beam 1 is currently applied only to UE group 1, but it needs to be applied to all other UE groups as time passes.

Accordingly, the signaling overhead can be reduced through a multi-cast beam indication method in which multiple UEs receive beam indications, rather than the existing UE specific beam indication method.

That is, in the present disclosure, each UE group is composed of one or more UEs, and a method of indicating one or more beams to one or more UE groups with a single signaling is proposed. Hereinafter, for the convenience of explanation in the present disclosure, it is assumed that a UE knows which UE group it belongs to, and as an example, a base station can in advance indicate to each UE which UE group it belongs to.

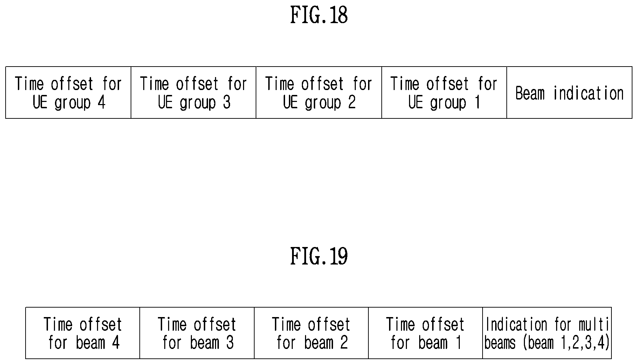

FIG. 18 is a diagram illustrating a beam indication according to an embodiment of the present disclosure.

Referring to FIG. 18, a multi-cast beam indication may include information on a beam to be applied to one or more UE groups (e.g., TCI state or QCL type-D RS, etc.) and a time offset to apply the beam to each UE group. In addition, identification information/index for each UE group may be further included. As described above, one UE group may be composed of one or more UEs. For example, in the case of being composed of one UE, UE groups 1, 2, 3, and 4 in FIG. 18 may be interpreted as UEs 1, 2, 3, and 4, respectively.

That is, a base station may indicate a beam to be applied to multiple UE groups through the multi-cast beam indication, and may also indicate a time offset for when to apply the beam to each UE group. Here, the time offset may be indicated in units of OFDM symbols, slots, absolute time units (e.g., ms), etc.

Here, a reference time for applying the time offset may be a time at which a corresponding multi-cast signal (i.e., the signal including the multi-cast beam indication) is received by a UE, or a reference time itself may be added to a multi-cast signal (i.e., the signal including the multi-cast beam indication) and indicated. Here, a unit of the reference time for applying the time offset may be applied in the same manner as a unit of the corresponding time offset. For example, when a multi-cast beam indication is transmitted as a DCI, a reference time may be determined based on the last OFDM symbol in which the DCI is received.

Each UE can apply the indicated beam at a time calculated by adding the time offset value in the UE group to which it belongs to the reference time (or from that time until the next new beam is indicated). In addition, each UE can apply the indicated beam for a specific duration from a time calculated by adding the time offset value in the UE group to which it belongs to the reference time. Here, the duration can be provided to a UE by a multi-cast beam indication or separate signaling, and can be predefined in the standard, etc.

For example, if the indication method of FIG. 18 is applied to the case of FIG. 17, beam indication = beam 1 may be indicated, and time offset values of 1, 2, 3, and 4 may be indicated for UE groups 1, 2, 3, and 4, respectively. As described above, the time offset may be indicated in OFDM symbol units, slot units, absolute time units (e.g., ms), etc., and it is assumed that it is indicated in slot units. In this case, for a reference slot n determined by a reference time, UE groups 1, 2, 3, and 4 apply beam 1 to slots n+1, n+2, n+3, and n+4, respectively, and may apply the beam until a next beam indication or for a specific duration (here, duration information may be additionally indicated).

FIG. 19 is a diagram illustrating a beam indication according to an embodiment of the present disclosure.

Referring to FIG. 19, a beam indication may include information on one or more beams (e.g., TCI status or QCL type-D RS, etc.) and a time offset to apply the beam to each beam. In addition, identification information/index for a target UE group (or UE) may be further included. Here, the time offset may be indicated in units of OFDM symbols, slots, absolute time units (e.g., ms), etc.

That is, a base station can multicast beam indications to a group of UEs experiencing similar/same channel environments. Here, in an environment where prediction of future beams is possible, such as HST, the base station can perform instructions for not only one beam but also multiple beams to be applied in the more distant future at once. For example, if a base station (e.g., base station AI) determines that it is good to apply beam 1 to UE group 1 at time t and to apply beams 2, 3, and 4 at times t+1, t+2, and t+3, respectively, the base station can signal a multicast beam indication as in FIG. 19 to the UE group.

Alternatively, as described above, a UE group may be composed of one or more UEs. For example, in the case of a single UE, a beam indication (i.e., unicast beam indication) according to FIG. 19 may be signaled to a single UE.

That is, one or more beams may be indicated by a single beam indication, and a time offset value to which each beam is to be applied may be indicated. Referring to FIG. 19, an example is given where beams 1, 2, 3, and 4 are indicated at once, and the time offset value to which each beam should be applied is indicated. The UE group (or UE) that receives this may apply beam 1 after offset 1, beam 2 after offset 2, beam 3 after offset 3, and beam 4 after offset 4, from the reference time. As described above, the time offset may be indicated in units of OFDM symbols, slots, absolute time units (e.g., ms), etc. In addition, the reference time for applying the time offset may be a time at which a multicast signal (i.e., a signal including a multi-cast beam indication) is completely received by a UE, or the reference time itself may be added to a multi-cast signal (i.e., a signal including a multi-cast beam indication) and indicated. Here, a unit of the reference time for applying the time offset may be applied in the same manner as a unit of the time offset.

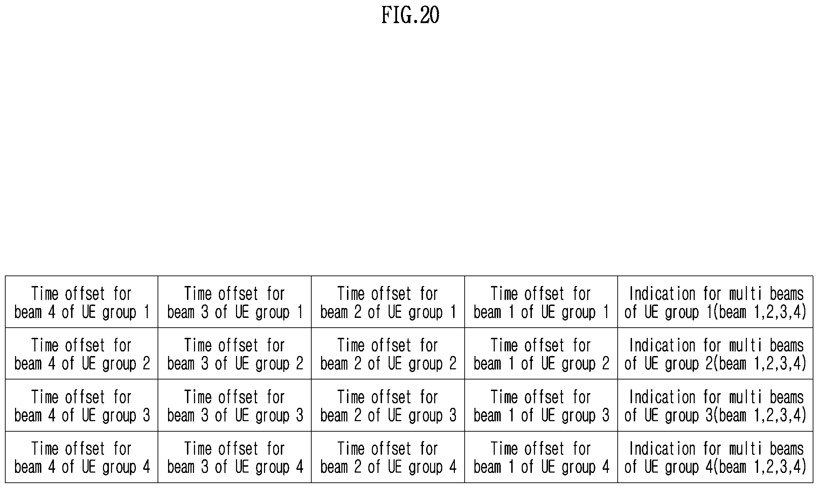

FIG. 20 is a diagram illustrating a beam indication according to an embodiment of the present disclosure.

FIG. 20 illustrates a case in which the examples of FIG. 18 and FIG. 19 described above are combined. That is, referring to FIG. 20, a multi-cast beam indication may include information on one or more beams to be applied to one or more UE groups (e.g., TCI status or QCL type-D RS, etc.) and a time offset to apply each beam to each UE group. In addition, identification information/index for each UE group may be further included. Here, the time offset may be indicated in units of OFDM symbols, slots, absolute time units (e.g., ms), etc. As described above, one UE group may be composed of one or more UEs. For example, when composed of one UE, UE groups 1, 2, 3, and 4 in Fig. 20 may be interpreted as UEs 1, 2, 3, and 4, respectively.

Referring to FIG. 20, beams 1, 2, 3, and 4 can be applied equally to UE groups 1, 2, 3, and 4, however the time offset to which each beam is applied can be configured independently for each UE group.

Alternatively, in FIG. 20, for convenience of explanation, beams 1, 2, 3, and 4 are configured to the same for all UE groups 1, 2, 3, and 4, however different beams may be configured for each UE group. For example, beams 1, 2, 3, and 4 may be configured for UE groups 1 and 2, beams 2, 3, and 4 may be configured for UE group 3, and beams 3 and 4 may be configured for UE group 4. In this case, only time offset information for the beams configured for each UE group may be included.

The multi-cast beam indication information described above may be indicated to UEs in various signaling methods such as DCI/MAC control element (CE)/RRC.

For example, when DCI is used, a DCI format 2-x for multi-cast purposes can be additionally defined and used to transmit the corresponding multi-cast beam indication information. That is, a separate DCI format for transmitting the multi-cast beam indication information can be defined. In addition, a separate RNTI used for scrambling sequence generation and CRC (cyclic redundancy check) check of the corresponding DCI can be additionally defined. That is, a separate RNTI for transmitting the multi-cast beam indication information can be defined, and in this case, a UE can decode the DCI including the corresponding multi-cast beam indication information using the newly defined RNTI.

As another example, when a MAC-CE is used (or RRC signaling is used), the multi-cast beam indication information may be transmitted via a PDSCH. In this case, DCI scheduling the corresponding PDSCH may be transmitted via a common search space so that it can be delivered to multiple UEs. In addition, a separate RNTI used for scrambling sequence generation and CRC check of the DCI scheduling the corresponding PDSCH may be additionally defined, and in this case, a UE may decode the DCI including the multi-cast beam indication information using the newly defined RNTI.

In addition, in the proposed method described above, in order for a network/base station to derive a corresponding output (i.e., multi-cast beam indication information) (e.g., output (16) in FIG. 12, and the output may be derived through a procedure such as FIG. 14 or FIG. 15), a UE or UE group may provide the network/base station with information related to a location and/or speed of a UE, DL channel/signal measurement values, SINR (signal to interference and noise ratio) per beam, RSRP (reference signal received power) per beam, beam preference, etc. as input parameters (e.g., inference data (12) in FIG. 12).

In addition, the proposed method according to the embodiment described above assumes an HST environment for convenience of explanation, but the present disclosure is not limited thereto and may be extended and applied to other scenarios/environments.

In addition, the proposed method according to the above-described embodiment may be applied alone, or two or more proposed methods may be finally applied through combination/combination.

In addition, the application of the proposed operations according to the above-described embodiment may be indicated by a base station to a UE through signaling such as RRC/MAC CE (control element)/DCI.

In addition, the proposed operations according to the above-described embodiment may be applied to various channels or reference signals such as a PDSCH/PUSCH/PDCCH/PUCCH.

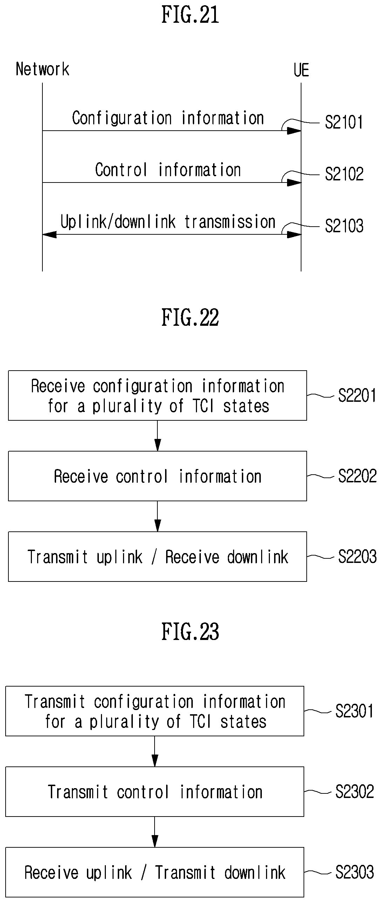

FIG. 21 is a diagram illustrating a signaling procedure between a network and a UE for a wireless signal transmission and reception method according to an embodiment of the present disclosure.

FIG. 21 illustrates signaling between a network (e.g., TRP 1, TRP 2) and a UE for methods proposed in the present disclosure (e.g., one proposed method or a combination of multiple proposed methods) . Here, a UE/network is only an example and can be substituted with various devices. FIG. 21 is only for convenience of explanation and does not limit the scope of the present disclosure. In addition, some step(s) illustrated in FIG. 21 may be omitted depending on the situation and/or setting.

The signaling method described in FIG. 21 can be extended and applied to signaling between multiple TRPs and multiple UEs. In the following description, a network may be one base station including multiple TRPs, and may be one cell including multiple TRPs. For example, an ideal/non-ideal backhaul may be configured between TRP 1 and TRP 2 that constitute a network. In addition, the following description is based on multiple TRPs, but it can be equally extended and applied to transmission through multiple panels. In addition, in the present disclosure, an operation of a UE receiving a signal from TRP1/TRP2 can also be interpreted/described as (or can be an operation of) an operation of a UE receiving a signal from a network (via/using TRP1/2), and an operation of a UE transmitting a signal to TRP1/TRP2 can also be interpreted/described as (or can be an operation of) an operation of a UE transmitting a signal to a network (via/using TRP1/TRP2), and vice versa.

A base station may be a general term for an object that performs data transmission and reception with a UE. For example, a base station may be a concept including one or more TPs (Transmission Points), one or more TRPs (Transmission and Reception Points), etc. In addition, a TP and/or TRP may include a panel, a transmission and reception unit, etc. of a base station. In addition, "TRP" may be applied by substituting it with expressions such as panel, antenna array, cell (e.g., macro cell / small cell / pico cell, etc.), transmission point, base station (gNB, etc.). As described above, TRPs can be distinguished based on information (e.g., index, ID) about the CORESET group (or CORESET pool). As described above, TRPs can be distinguished based on information (e.g., index, ID) on a CORESET group (or CORESET pool). For example, if one UE is configured to perform transmission and reception with multiple TRPs (or cells), this may mean that multiple CORESET groups (or CORESET pools) are configured for one UE. Such configuration of CORESET groups (or CORESET pools) can be performed via higher layer signaling (e.g., RRC signaling, etc.).

A UE receives configuration information from a network (S2101).

The configuration information may include information related to network configuration (e.g., TRP configuration) / information related to M-TRP-based transmission and reception (e.g., resource allocation, etc.). Here, the configuration information may be transmitted through higher layer signaling (e.g., RRC signaling, MAC-CE, etc.).

The configuration information may include configuration information related to the configuration of a TCI state (i.e., beam) described in the above-described proposed method (e.g., one proposed method or a combination of multiple proposed methods).

More specifically, the configuration information may include information for configuring a joint TCI and/or a separate DL/UL TCI. For example, the configuration information may include a list of TCI states that provide a reference signal for QCL for a DMRS/downlink signal (e.g., CSI-RS) of a downlink channel (e.g., PDSCH, PDCCH) and/or provide a reference for determining an uplink transmission spatial filter of a DMRS/uplink signal (e.g., SRS) of an uplink channel (e.g., PUSCH, PUCCH). For example, a UE may be configured with a list of up to M TCI-state configurations (i.e., DL TCI) in a higher layer parameter PDSCH-Config for decoding a PDSCH. As another example, a UE may be configured with a list of up to 128 TCI-state configurations in the PDSCH-Config to i) provide an RS for QCL for a DMRS of PDSCH, a DMRS of PDCCH, and a CSI-RS and ii) provide a reference for determining a UL Tx spatial filter for dynamic grant and configured-grant based PUSCH and PUCCH resources. As another example, a UE may be configured with a list of up to 64 TCI-UL-State configurations (i.e., UL TCI) in the higher layer parameter BWP-UplinkDedicated.

In addition, a plurality of UEs may be configured into multiple UE groups, and each UE group may be configured with one or more UEs. In this case, the configuration information may include information on the UE group (or information on the UE group to which it belongs).

A UE receives control information from a network (S2102).

Here, the control information may correspond to the above-described beam indication (or TCI state indication), or may be control information including the above-described beam indication (or TCI state indication). Hereinafter, for convenience of explanation, it will be collectively referred to as control information.

The control information may indicate one or more TCI states (i.e., beams) to be applied to one or more UEs (or to one or more UE groups) within a list of TCI states configured by the above-described configuration information (among multiple TCI states). In addition, the control information may designate downlink transmission (e.g., PDSCH, PDCCH, etc.) and/or uplink transmission (e.g., PUSCH, PUCCH, etc.) to which the indication of the corresponding beam (i.e., TCI state) is applied.

In addition, the control information may include an respective time offset for each of the one or more TCI states. Here, the time offset may be indicated in symbol units, slot units, or absolute time units.

For example, as in the example of FIG. 18, the control information may include information on one TCI state to be applied to one or more UE groups (or one or more UEs) and a time offset for the one TCI state for each of the one or more UE groups (or one or more UEs). As another example, as in the example of FIG. 19, the control information may include information on one or more TCI states to be applied to one UE group (or one UE) and a time offset for each of the one or more TCI states. As another example, as in the example of FIG. 20, the multicast control information may include information on one or more TCI states to be applied to one or more UE groups (or one or more UEs) and a time offset for each of the one or more TCI states for each of the one or more UE groups (or one or more UEs).

Here, the time offset may be calculated from a time point of completion of reception of the multicast control information in a time domain. Alternatively, the multicast control information may further include information on a reference time for the time offset, in which case the time offset may be calculated from the reference time in a time domain.

In addition, the multicast control information may include information on a time period to which the one or more TCI states are to be applied, in which case the one or more TCI states may be applied during the time period from a time according to the time offset. In addition, the time period may be indicated in symbol units, slot units, or absolute time units, like the time offset. In addition, like the time offset of FIG. 18, the time period may also be indicated for each of the one or more UE groups, for each of the one or more TCI states. In addition, like the time offset of FIG. 19, the time period may also be indicated for each of the one or more TCI states. In addition, like the time offset of FIG. 20, the time period may also be indicated for each of the one or more TCI states for each of the one or more UE groups.

The one or more TCI states may correspond to outputs derived by a network/base station from an artificial intelligence/machine learning (AI/ML) model. For example, the one or more TCI states may correspond to output (16) in FIG. 12, and the output may be derived through a procedure such as FIG. 14 or FIG. 15. Here, the one or more TCI states can be derived from an artificial intelligence/machine learning (AI/ML) model using at least one of {position, speed, downlink channel measurement value, signal to interference and noise ratio (SINR) per downlink reference signal, reference signal received power (RSRP) per downlink reference signal, preference for downlink reference signal} for the one or more UEs.

In addition, the multicast control information can be transmitted in various signaling methods such as DCI/MAC CE/RRC.

For example, when DCI is used, the DCI may be transmitted via a PDCCH. In addition, a DCI format defined for multicast control information may be used, and/or an RNTI defined for multicast control information may be used for CRC scrambling of the DCI.

As another example, when a MAC CE is used, the MAC CE may be transmitted via a PDSCH. In addition, DCI scheduling the PDSCH may be monitored/received in a common search space, and an RNTI defined for multicast control information may be used for CRC scrambling of the DCI.

A UE may transmit an uplink transmission (e.g., PUSCH, PUCCH, etc.) to a network or receive a downlink transmission (e.g., PDSCH, PDCCH, etc.) from a network based on the one or more TCI states (S2103).

Here, transmitting uplink transmission or receiving downlink transmission based on one or more of the TCI states may have the following meanings. For example, in the case of uplink transmission, a UE may determine an uplink transmission spatial filter (UL TX spatial filter) based on one or more of the TCI states (e.g., based on an RS set to qcl-Type set to 'typeD' of the TCI-state or an RS in the TCI-UL-State) to transmit the uplink transmission. In addition, in the case of downlink transmission, a UE may assume that a DMRS of the downlink transmission is QCLed with an RS set to qcl-Type set to 'typeD' of the one or more of the TCI states for receiving the downlink transmission.

If the multicast control information includes a respective time offset for each of the one or more TCI states, a UE can transmit uplink transmission or receive downlink transmission based on the one or more TCI states from a time according to the time offset.

If the multicast control information includes information on a time period to which the one or more TCI states are to be applied, a UE may transmit uplink transmission or receive downlink transmission based on the one or more TCI states during the time period from a time according to the time offset. Alternatively, if the multicast control information does not include information on a time period during which the one or more TCI states are to be applied, a UE may transmit uplink transmission or receive downlink transmission based on the one or more TCI states until another TCI state is indicated by other multicast control information.

FIG. 22 is a diagram illustrating an operation of a UE for a wireless signal transmission and reception method according to an embodiment of the present disclosure.

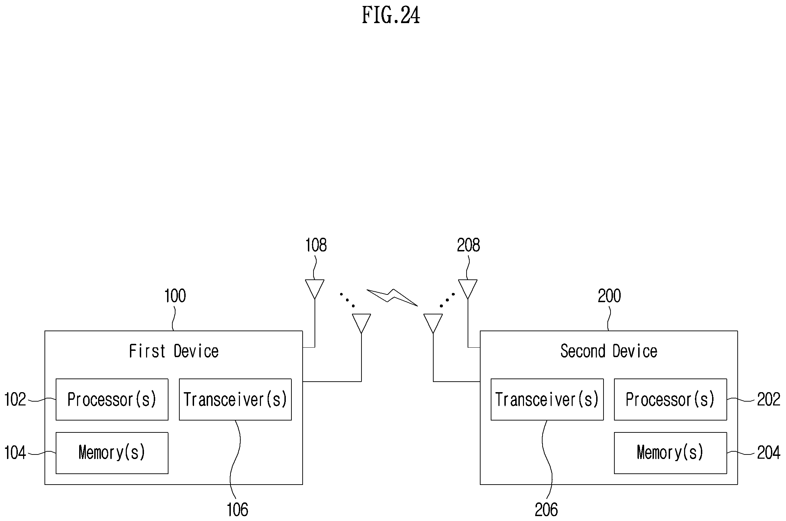

Referring to FIG. 22, FIG. 22 illustrates an operation of a UE based on the proposed methods (e.g., one proposed method or a combination of multiple proposed methods). The example of FIG. 22 is for convenience of explanation and does not limit the scope of the present disclosure. Some of the step(s) illustrated in FIG. 22 may be omitted depending on the situation and/or setting. In addition, a UE in FIG. 22 is only an example and may be implemented as a device illustrated in FIG. 24 below. For example, the processor (102/202) of FIG. 24 may control the transceiver (106/206) to transmit and receive channels/signals/data/information, etc., and may also control the processor (102/202) of FIG. 24 to store the channels/signals/data/information to be transmitted or received in the memory (104/204).

In addition, an operation of FIG. 22 may be processed by one or more processors (102, 202) of FIG. 24, and an operation of FIG. 22 may be stored in a memory (e.g., one or more memories (104, 204) of FIG. 24) in the form of a command/program (e.g., an instruction, an executable code) for driving at least one processor (e.g., 102, 202) of FIG. 24.

A UE receives configuration information for multiple TCI states from a base station (S2201).

The configuration information may include configuration information related to the configuration of a TCI state (i.e., beam) described in the above-described proposed method (e.g., one proposed method or a combination of multiple proposed methods).

More specifically, the configuration information for multiple TCI states may include information for configuring a joint TCI and/or a separate DL/UL TCI. For example, the configuration information may include a list of TCI states that provide a reference signal for QCL for a DMRS/downlink signal (e.g., CSI-RS) of a downlink channel (e.g., PDSCH, PDCCH) and/or provide a reference for determining an uplink transmission spatial filter of a DMRS/uplink signal (e.g., SRS) of an uplink channel (e.g., PUSCH, PUCCH). For example, a UE may be configured with a list of up to M TCI-state configurations (i.e., DL TCI) in a higher layer parameter PDSCH-Config for decoding a PDSCH. As another example, a UE may be configured with a list of up to 128 TCI-state configurations in the PDSCH-Config to i) provide an RS for QCL for a DMRS of PDSCH, a DMRS of PDCCH, and a CSI-RS and ii) provide a reference for determining a UL Tx spatial filter for dynamic grant and configured-grant based PUSCH and PUCCH resources. As another example, a UE may be configured with a list of up to 64 TCI-UL-State configurations (i.e., UL TCI) in the higher layer parameter BWP-UplinkDedicated.

In addition, a plurality of UEs may be configured into multiple UE groups, and each UE group may be configured with one or more UEs. In this case, although not shown in FIG. 22, a UE can receive configuration information from a base station that includes information on the UE group (or information on the UE group to which it belongs).

A UE receives control information from a base station (S2202).

Here, the control information may correspond to the above-described beam indication (or TCI state indication), or may be control information including the above-described beam indication (or TCI state indication). Hereinafter, for convenience of explanation, it will be collectively referred to as control information.

The control information may indicate one or more TCI states (i.e., beams) to be applied to one or more UEs (or to one or more UE groups) within a list of TCI states configured by the above-described configuration information (among multiple TCI states). In addition, the control information may designate downlink transmission (e.g., PDSCH, PDCCH, etc.) and/or uplink transmission (e.g., PUSCH, PUCCH, etc.) to which the indication of the corresponding beam (i.e., TCI state) is applied.

In addition, the control information may include an respective time offset for each of the one or more TCI states. Here, the time offset may be indicated in symbol units, slot units, or absolute time units.

For example, as in the example of FIG. 18, the control information may include information on one TCI state to be applied to one or more UE groups (or one or more UEs) and a time offset for the one TCI state for each of the one or more UE groups (or one or more UEs). As another example, as in the example of FIG. 19, the control information may include information on one or more TCI states to be applied to one UE group (or one UE) and a time offset for each of the one or more TCI states. As another example, as in the example of FIG. 20, the multicast control information may include information on one or more TCI states to be applied to one or more UE groups (or one or more UEs) and a time offset for each of the one or more TCI states for each of the one or more UE groups (or one or more UEs).

Here, the time offset may be calculated from a time point of completion of reception of the multicast control information in a time domain. Alternatively, the multicast control information may further include information on a reference time for the time offset, in which case the time offset may be calculated from the reference time in a time domain.

In addition, the multicast control information may include information on a time period to which the one or more TCI states are to be applied, in which case the one or more TCI states may be applied during the time period from a time according to the time offset. In addition, the time period may be indicated in symbol units, slot units, or absolute time units, like the time offset. In addition, like the time offset of FIG. 18, the time period may also be indicated for each of the one or more UE groups, for each of the one or more TCI states. In addition, like the time offset of FIG. 19, the time period may also be indicated for each of the one or more TCI states. In addition, like the time offset of FIG. 20, the time period may also be indicated for each of the one or more TCI states for each of the one or more UE groups.

The one or more TCI states may correspond to outputs derived by a network/base station from an artificial intelligence/machine learning (AI/ML) model. For example, the one or more TCI states may correspond to output (16) in FIG. 12, and the output may be derived through a procedure such as FIG. 14 or FIG. 15. Here, the one or more TCI states can be derived from an artificial intelligence/machine learning (AI/ML) model using at least one of {position, speed, downlink channel measurement value, signal to interference and noise ratio (SINR) per downlink reference signal, reference signal received power (RSRP) per downlink reference signal, preference for downlink reference signal} for the one or more UEs.

In addition, the multicast control information can be transmitted in various signaling methods such as DCI/MAC CE/RRC.

For example, when DCI is used, the DCI may be transmitted via a PDCCH. In addition, a DCI format defined for multicast control information may be used, and/or an RNTI defined for multicast control information may be used for CRC scrambling of the DCI.

As another example, when a MAC CE is used, the MAC CE may be transmitted via a PDSCH. In addition, DCI scheduling the PDSCH may be monitored/received in a common search space, and an RNTI defined for multicast control information may be used for CRC scrambling of the DCI.

A UE may transmit an uplink transmission (e.g., PUSCH, PUCCH, etc.) to a base station or receive a downlink transmission (e.g., PDSCH, PDCCH, etc.) from a base station based on the one or more TCI states (S2203).

Here, transmitting uplink transmission or receiving downlink transmission based on one or more of the TCI states may have the following meanings. For example, in the case of uplink transmission, a UE may determine an uplink transmission spatial filter (UL TX spatial filter) based on one or more of the TCI states (e.g., based on an RS set to qcl-Type set to 'typeD' of the TCI-state or an RS in the TCI-UL-State) to transmit the uplink transmission. In addition, in the case of downlink transmission, a UE may assume that a DMRS of the downlink transmission is QCLed with an RS set to qcl-Type set to 'typeD' of the one or more of the TCI states for receiving the downlink transmission.

If the multicast control information includes a respective time offset for each of the one or more TCI states, a UE can transmit uplink transmission or receive downlink transmission based on the one or more TCI states from a time according to the time offset.

If the multicast control information includes information on a time period to which the one or more TCI states are to be applied, a UE may transmit uplink transmission or receive downlink transmission based on the one or more TCI states during the time period from a time according to the time offset. Alternatively, if the multicast control information does not include information on a time period during which the one or more TCI states are to be applied, a UE may transmit uplink transmission or receive downlink transmission based on the one or more TCI states until another TCI state is indicated by other multicast control information.

FIG. 23 is a diagram illustrating an operation of a base station for a wireless signal transmission and reception method according to an embodiment of the present disclosure.

Referring to FIG. 23, FIG. 23 illustrates an operation of a base station based on the proposed methods (e.g., one proposed method or a combination of multiple proposed methods). The example of FIG. 23 is for convenience of explanation and does not limit the scope of the present disclosure. Some of the step(s) illustrated in FIG. 23 may be omitted depending on the situation and/or setting. In addition, a base station in FIG. 23 is only an example and may be implemented as a device illustrated in FIG. 24 below. For example, the processor (102/202) of FIG. 24 may control the transceiver (106/206) to transmit and receive channels/signals/data/information, etc., and may also control the processor (102/202) of FIG. 24 to store the channels/signals/data/information to be transmitted or received in the memory (104/204).

In addition, an operation of FIG. 23 may be processed by one or more processors (102, 202) of FIG. 24, and an operation of FIG. 23 may be stored in a memory (e.g., one or more memories (104, 204) of FIG. 24) in the form of a command/program (e.g., an instruction, an executable code) for driving at least one processor (e.g., 102, 202) of FIG. 24.

A base station transmits configuration information for multiple TCI states to a UE (S2301).

The configuration information may include configuration information related to the configuration of a TCI state (i.e., beam) described in the above-described proposed method (e.g., one proposed method or a combination of multiple proposed methods).

More specifically, the configuration information for multiple TCI states may include information for configuring a joint TCI and/or a separate DL/UL TCI. For example, the configuration information may include a list of TCI states that provide a reference signal for QCL for a DMRS/downlink signal (e.g., CSI-RS) of a downlink channel (e.g., PDSCH, PDCCH) and/or provide a reference for determining an uplink transmission spatial filter of a DMRS/uplink signal (e.g., SRS) of an uplink channel (e.g., PUSCH, PUCCH). For example, a UE may be configured with a list of up to M TCI-state configurations (i.e., DL TCI) in a higher layer parameter PDSCH-Config for decoding a PDSCH. As another example, a UE may be configured with a list of up to 128 TCI-state configurations in the PDSCH-Config to i) provide an RS for QCL for a DMRS of PDSCH, a DMRS of PDCCH, and a CSI-RS and ii) provide a reference for determining a UL Tx spatial filter for dynamic grant and configured-grant based PUSCH and PUCCH resources. As another example, a UE may be configured with a list of up to 64 TCI-UL-State configurations (i.e., UL TCI) in the higher layer parameter BWP-UplinkDedicated.

In addition, a plurality of UEs may be configured into multiple UE groups, and each UE group may be configured with one or more UEs. In this case, although not shown in FIG. 23, a base station can transmit configuration information to a UE that includes information on the UE group (or information on the UE group to which it belongs).

A base station transmits control information to a UE (S2302).

Here, a base station may transmit control information to multiple UEs, however for convenience of explanation, an operation of a base station in FIG. 23 is described targeting one UE.

Here, the control information may correspond to the above-described beam indication (or TCI state indication), or may be control information including the above-described beam indication (or TCI state indication). Hereinafter, for convenience of explanation, it will be collectively referred to as control information.

The control information may indicate one or more TCI states (i.e., beams) to be applied to one or more UEs (or to one or more UE groups) within a list of TCI states configured by the above-described configuration information (among multiple TCI states). In addition, the control information may designate downlink transmission (e.g., PDSCH, PDCCH, etc.) and/or uplink transmission (e.g., PUSCH, PUCCH, etc.) to which the indication of the corresponding beam (i.e., TCI state) is applied.

In addition, the control information may include an respective time offset for each of the one or more TCI states. Here, the time offset may be indicated in symbol units, slot units, or absolute time units.

For example, as in the example of FIG. 18, the control information may include information on one TCI state to be applied to one or more UE groups (or one or more UEs) and a time offset for the one TCI state for each of the one or more UE groups (or one or more UEs). As another example, as in the example of FIG. 19, the control information may include information on one or more TCI states to be applied to one UE group (or one UE) and a time offset for each of the one or more TCI states. As another example, as in the example of FIG. 20, the multicast control information may include information on one or more TCI states to be applied to one or more UE groups (or one or more UEs) and a time offset for each of the one or more TCI states for each of the one or more UE groups (or one or more UEs) .

Here, the time offset may be calculated from a time point of completion of reception of the multicast control information in a time domain. Alternatively, the multicast control information may further include information on a reference time for the time offset, in which case the time offset may be calculated from the reference time in a time domain.

In addition, the multicast control information may include information on a time period to which the one or more TCI states are to be applied, in which case the one or more TCI states may be applied during the time period from a time according to the time offset. In addition, the time period may be indicated in symbol units, slot units, or absolute time units, like the time offset. In addition, like the time offset of FIG. 18, the time period may also be indicated for each of the one or more UE groups, for each of the one or more TCI states. In addition, like the time offset of FIG. 19, the time period may also be indicated for each of the one or more TCI states. In addition, like the time offset of FIG. 20, the time period may also be indicated for each of the one or more TCI states for each of the one or more UE groups.

The one or more TCI states may correspond to outputs derived by a network/base station from an artificial intelligence/machine learning (AI/ML) model. For example, the one or more TCI states may correspond to output (16) in FIG. 12, and the output may be derived through a procedure such as FIG. 14 or FIG. 15. Here, the one or more TCI states can be derived from an artificial intelligence/machine learning (AI/ML) model using at least one of {position, speed, downlink channel measurement value, signal to interference and noise ratio (SINR) per downlink reference signal, reference signal received power (RSRP) per downlink reference signal, preference for downlink reference signal} for the one or more UEs.

In addition, the multicast control information can be transmitted in various signaling methods such as DCI/MAC CE/RRC.

For example, when DCI is used, the DCI may be transmitted via a PDCCH. In addition, a DCI format defined for multicast control information may be used, and/or an RNTI defined for multicast control information may be used for CRC scrambling of the DCI.

As another example, when a MAC CE is used, the MAC CE may be transmitted via a PDSCH. In addition, DCI scheduling the PDSCH may be monitored/received in a common search space, and an RNTI defined for multicast control information may be used for CRC scrambling of the DCI.

A base station may receive uplink transmission (e.g., PUSCH, PUCCH, etc.) from a UE or transmit downlink transmission (e.g., PDSCH, PDCCH, etc.) to a UE based on one or more of the TCI states (S2303).

Here, transmitting uplink transmission or receiving downlink transmission based on one or more of the TCI states may have the following meanings. For example, in the case of uplink transmission, a UE may determine an uplink transmission spatial filter (UL TX spatial filter) based on one or more of the TCI states (e.g., based on an RS set to qcl-Type set to 'typeD' of the TCI-state or an RS in the TCI-UL-State) to transmit the uplink transmission. In addition, in the case of downlink transmission, a UE may assume that a DMRS of the downlink transmission is QCLed with an RS set to qcl-Type set to 'typeD' of the one or more of the TCI states for receiving the downlink transmission.

If the multicast control information includes a respective time offset for each of the one or more TCI states, a base station can receive uplink transmission or transmit downlink transmission based on the one or more TCI states from a time according to the time offset.

If the multicast control information includes information on a time period to which the one or more TCI states are to be applied, a base station may receive uplink transmission or transmit downlink transmission based on the one or more TCI states during the time period from a time according to the time offset. Alternatively, if the multicast control information does not include information on a time period during which the one or more TCI states are to be applied, a base station may receive uplink transmission or transmit downlink transmission based on the one or more TCI states until another TCI state is indicated by other multicast control information.

General Device to which the Present Disclosure may be applied

FIG. 24 is a diagram which illustrates a block diagram of a wireless communication device according to an embodiment of the present disclosure.

In reference to FIG. 24, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor (s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Availability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1.  A method performed by a user equipment (UE) in a wireless communication system, the method comprising:

    receiving, from a base station, configuration information for a plurality of transmission configuration indication (TCI) states;
    receiving, from the base station, control information, wherein the control information includes one or more TCI states to be applied to one or more UEs among the plurality of TCI states and an individual time offset for each of the one or more TCI states; and
    transmitting an uplink transmission or receiving a downlink transmission based on the one or more TCI states from a time according to the time offset.

2.  The method of claim 1, wherein the control information includes information on one TCI state to be applied to a plurality of UE groups and a time offset for the one TCI state for each of the plurality of UE groups.

3.  The method of claim 1, wherein the control information includes information on multiple TCI states to be applied to one UE group or one UE and a time offset for each of the multiple TCI states.

4.  The method of claim 1, wherein the time offset is calculated from a time of completion of reception of the control information in a time domain.

5.  The method of claim 1, wherein the control information further includes information on a reference time for the time offset, and
    wherein the time offset is calculated from the reference time in a time domain.

6.  The method of claim 1, wherein the time offset is indicated in a symbol unit, a slot unit, or an absolute time unit.

7.  The method of claim 1, wherein the control information includes information on a time period to which the one or more TCI states are applied, and
    wherein the one or more TCI states are applied during the time period from a time according to the time offset.

8.  The method of claim 1, wherein the one or more TCI states are applied until another TCI state is indicated by other control information.

9.  The method of claim 1, wherein the one or more TCI states are derived from an artificial intelligence/machine learning (AI/ML) model using at least one of {a position, a speed, a downlink channel measurement value, SINR (signal to interference and noise ratio) for each downlink reference signal, RSRP (reference signal received power) for each downlink reference signal, preference for a downlink reference signal} for the one or more UEs.

10. A user equipment (UE) operating in a wireless communication system, the UE comprising:

    at least one transceiver for transmitting and receiving a wireless signal; and
    at least one processor for controlling the at least one transceiver,
    wherein the at least one processor configured to:

    receive, from a base station, configuration information for a plurality of transmission configuration indication (TCI) states;
    receive, from the base station, control information, wherein the control information includes one or more TCI states to be applied to one or more UEs among the plurality of TCI states and an individual time offset for each of the one or more TCI states; and

transmit an uplink transmission or receive a downlink transmission based on the one or more TCI states from a time according to the time offset.

11. At least one non-transitory computer-readable medium storing at least one instruction, wherein the at least one instruction executable by at least one processor controls a user equipment (UE) to:

receive, from a base station, configuration information for a plurality of transmission configuration indication (TCI) states;

receive, from the base station, control information, wherein the control information includes one or more TCI states to be applied to one or more UEs among the plurality of TCI states and an individual time offset for each of the one or more TCI states; and

transmit an uplink transmission or receive a downlink transmission based on the one or more TCI states from a time according to the time offset.

12. A processing apparatus configured to control a user equipment (UE) in a wireless communication system, the processing apparatus comprising:

at least one processor; and

at least one computer memory operably connected to the at least one processor and storing instructions that, based on being executed by the at least one processor, perform operations comprising:

receiving, from a base station, configuration information for a plurality of transmission configuration indication (TCI) states;

receiving, from the base station, control information, wherein the control information includes one or more TCI states to be applied to one or more UEs among the plurality of TCI states and an individual time offset for each of the one or more TCI states; and

transmitting an uplink transmission or receiving a downlink transmission based on the one or more TCI states from a time according to the time offset.

13. A method performed by a base station in a wireless communication system, the method comprising:

transmitting, to a user equipment (UE), configuration information for a plurality of transmission configuration indication (TCI) states;

transmitting, to the UE, control information, wherein the control information includes one or more TCI states to be applied to one or more UEs among the plurality of TCI states and an individual time offset for each of the one or more TCI states; and

receiving an uplink transmission or transmitting a downlink transmission based on the one or more TCI states from a time according to the time offset.

14. A base station operating in a wireless communication system, the base station comprising:

at least one transceiver for transmitting and receiving a wireless signal; and

at least one processor for controlling the at least one transceiver,

wherein the at least one processor configured to:

transmit, to a user equipment (UE), configuration information for a plurality of transmission configuration indication (TCI) states;

transmit, to the UE, control information, wherein the control information includes one or more TCI states to be applied to one or more UEs among the plurality of TCI states and an individual time offset for each of the one or more TCI states; and

receive an uplink transmission or transmit a downlink transmission based on the one or more TCI states from a time according to the time offset.

FIG.1

FIG.2

Radio Frame 10ms

Fixed Size

Subframe 1ms

| 0 | 1 | 2 | 3 | 4 | 5 | 6 | 7 | 8 | 9 |

Subframe ={1,2,4} Slots

Slot

| 0 | 1 | 2 | 3 |

Slot={7,14} Symbols

Symbol

| 0 | 1 | 2 | 3 | 4 | 5 | 6 | 7 | 8 | 9 | 10 | 11 | 12 | 13 |

Size depends
on subcarrier
spacing

Mini-Slot
(URLLC)

Mini-Slot={2,4,7} Symbols

FIG.3

One Subframe

$14 \cdot 2^{\mu}$ OFDM Symbol

$k = N_{RB}^{\mu} N_{SC}^{RB} - 1$

Resource Block

Resource Element
- In a resource grid, $(k, \bar{l})$
- In a resource block, $(k, l)$

$N_{RB}^{\mu} N_{SC}^{RB} - 1$ Subcarrier

$N_{SC}^{RB}$ Subcarrier

$k = 0$

$l = 0$

$l = 14 \cdot 2^{\mu} - 1$

FIG.4

Freq.

1ms subframe:
14 symbols/slot

12 × 15 KHz

12 × 30 KHz

PRB

12 × 60 KHz

Time

# FIG.5

FIG.6

EP 4 518 184 A1

INITIAL CELL
SEARCH

SYSTEM
INFORMATION
RECEPTION

RANDOM ACCESS PROCEDURE

GENERAL DL/UL Tx/Rx

PSS/SSS&
[DLRS]&
PBCH

PDCCH/
PDSCH
(BCCH)

PRACH

PDCCH/
PDSCH

PUSCH

PDCCH/
PDSCH

PDCCH/
PDSCH

PUSCH/
PUCCH

S601    S602    S603    S604    S605    S606    S607    S608

· DL/UL ACK/NACK
· UE CQI/PMI RI REPORT
  USING PUSCH AND PUCCH

FIG.7

Artificial Intelligence

Machine learning

Deep Learning

FIG.8

Input layer     Hidden layer     Output layer

FIG.9

# FIG.10

Input image
36 × 36

4 feature maps

28 × 28

14 × 14

Convolution
(kernel:9 × 9 × 1)

Max pooling

# FIG.11

W    V

$x_1$    $h1$    $x'_1$

$x_2$    $h2$    $x'_2$

$x_3$    $x'_3$

Encoder    Decoder

Loss function: $\underset{W,V}{\arg\min} \| x - g(f(x)) \|^2$ ,

where $h = f(x) = Wx, x' = g(h) = Vh$

## FIG.12

## FIG.13

## FIG.14

## FIG.15

FIG.16

UE                                                    RAN node

1. Training data

2. Model training

3. Model deployment/update

4. Inference data

5. Model inference

6. Model performance feedback

7. Action

8. Feedback

FIG.17

Beam 2                                                Beam 1

Direction of train travel

| UE group 4 | UE group 3 | UE group 2 | UE group 1 |

Base station                                         Base station

Railroad

## FIG.18

| Time offset for<br>UE group 4 | Time offset for<br>UE group 3 | Time offset for<br>UE group 2 | Time offset for<br>UE group 1 | Beam indication |
|---|---|---|---|---|

## FIG.19

| Time offset<br>for beam 4 | Time offset<br>for beam 3 | Time offset<br>for beam 2 | Time offset<br>for beam 1 | Indication for multi<br>beams (beam 1,2,3,4) |
|---|---|---|---|---|

FIG.20

| Time offset for beam 4 of UE group 1 | Time offset for beam 3 of UE group 1 | Time offset for beam 2 of UE group 1 | Time offset for beam 1 of UE group 1 | Indication for multi beams of UE group 1(beam 1,2,3,4) |
|---|---|---|---|---|
| Time offset for beam 4 of UE group 2 | Time offset for beam 3 of UE group 2 | Time offset for beam 2 of UE group 2 | Time offset for beam 1 of UE group 2 | Indication for multi beams of UE group 2(beam 1,2,3,4) |
| Time offset for beam 4 of UE group 3 | Time offset for beam 3 of UE group 3 | Time offset for beam 2 of UE group 3 | Time offset for beam 1 of UE group 3 | Indication for multi beams of UE group 3(beam 1,2,3,4) |
| Time offset for beam 4 of UE group 4 | Time offset for beam 3 of UE group 4 | Time offset for beam 2 of UE group 4 | Time offset for beam 1 of UE group 4 | Indication for multi beams of UE group 4(beam 1,2,3,4) |

## FIG.21

Network                                                    UE

Configuration information ⟶ S2101

Control information ⟶ S2102

Uplink/downlink transmission ⟷ S2103

## FIG.22

| Receive configuration information for a plurality of TCI states | — S2201 |

↓

| Receive control information | — S2202 |

↓

| Transmit uplink / Receive downlink | — S2203 |

## FIG.23

| Transmit configuration information for a plurality of TCI states | — S2301 |

↓

| Transmit control information | — S2302 |

↓

| Receive uplink / Transmit downlink | — S2303 |

# FIG.24

<div align="center">

**INTERNATIONAL SEARCH REPORT**

</div>

| International application No. |
| --- |
| **PCT/KR2023/005665** |

**A.    CLASSIFICATION OF SUBJECT MATTER**

**H04B 7/08**(2006.01)i; **H04W 16/28**(2009.01)i; **H04W 4/06**(2009.01)i; **H04W 72/23**(2023.01)i

According to International Patent Classification (IPC) or to both national classification and IPC

**B.    FIELDS SEARCHED**

Minimum documentation searched (classification system followed by classification symbols)

H04B 7/08(2006.01); H04B 7/06(2006.01); H04L 1/18(2006.01); H04L 5/00(2006.01); H04W 16/28(2009.01); H04W 72/04(2009.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전송 설정 지시(transmission configuration indication), 상태(state), 시간 오프셋 (time offset), UE 그룹(user equipment group), 제어 정보(control information)

**C.    DOCUMENTS CONSIDERED TO BE RELEVANT**

| Category* | Citation of document, with indication, where appropriate, of the relevant passages | Relevant to claim No. |
| --- | --- | --- |
| Y | US 2022-0015082 A1 (SAMSUNG ELECTRONICS CO., LTD.) 13 January 2022 (2022-01-13)<br>See paragraphs [0153]-[0154], [0200], [0235]-[0236], [0243], [0378], [0383], [0387] and [0416]; and figures 21-25 and 27. | 1-14 |
| Y | US 2021-0120529 A1 (QUALCOMM INCORPORATED) 22 April 2021 (2021-04-22)<br>See paragraphs [0101], [0104], [0107]-[0108] and [0115]; and figures 4-5B. | 1-14 |
| Y | US 2021-0351885 A1 (SAMSUNG ELECTRONICS CO., LTD.) 11 November 2021 (2021-11-11)<br>See paragraph [0142]. | 9 |
| A | US 2022-0124768 A1 (TELEFONAKTIEBOLAGET LM ERICSSON (PUBL)) 21 April 2022 (2022-04-21)<br>See paragraphs [0169]-[0251]; and figures 10-16. | 1-14 |
| A | US 2022-0061056 A1 (SAMSUNG ELECTRONICS CO., LTD.) 24 February 2022 (2022-02-24)<br>See paragraphs [0205]-[0314]; and figures 12-29. | 1-14 |

☐ Further documents are listed in the continuation of Box C.      ☑ See patent family annex.

| | |
| --- | --- |
| *     Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| **02 August 2023** | **02 August 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2023/005665**

| Patent document cited in search report | | | Publication date (day/month/year) | Patent family member(s) | | | Publication date (day/month/year) |
|---|---|---|---|---|---|---|---|
| US | 2022-0015082 | A1 | 13 January 2022 | CN | 116076136 | A | 05 May 2023 |
| | | | | EP | 4165932 | A1 | 19 April 2023 |
| | | | | KR | 10-2023-0036113 | A | 14 March 2023 |
| | | | | WO | 2022-010291 | A1 | 13 January 2022 |
| US | 2021-0120529 | A1 | 22 April 2021 | CN | 114788379 | A | 22 July 2022 |
| | | | | EP | 4046315 | A1 | 24 August 2022 |
| | | | | US | 11617168 | B2 | 28 March 2023 |
| | | | | WO | 2021-076271 | A1 | 22 April 2021 |
| US | 2021-0351885 | A1 | 11 November 2021 | WO | 2020-213964 | A1 | 22 October 2020 |
| US | 2022-0124768 | A1 | 21 April 2022 | CN | 113508551 | A | 15 October 2021 |
| | | | | CO | 2021010206 | A2 | 29 October 2021 |
| | | | | EP | 3906632 | A1 | 10 November 2021 |
| | | | | JP | 2022-516193 | A | 24 February 2022 |
| | | | | JP | 2023-071663 | A | 23 May 2023 |
| | | | | JP | 7223856 | B2 | 16 February 2023 |
| | | | | KR | 10-2021-0109610 | A | 06 September 2021 |
| | | | | WO | 2020-141484 | A1 | 09 July 2020 |
| US | 2022-0061056 | A1 | 24 February 2022 | CN | 116076135 | A | 05 May 2023 |
| | | | | EP | 4183199 | A1 | 24 May 2023 |
| | | | | KR | 10-2023-0051681 | A | 18 April 2023 |
| | | | | WO | 2022-039481 | A1 | 24 February 2022 |

Form PCT/ISA/210 (patent family annex) (July 2022)